# EUROPÄISCHE PATENTANMELDUNG

(11) **EP 4 524 004 A1**
(43) Veröffentlichungstag der Anmeldung: **19.03.2025**
(21) Anmeldenummer: 24190270.9
(22) Anmeldetag: 23.07.2024
(51) Int. Cl.: B62D 25/10, B60Q 1/00, B62D 25/12

(54) **LANDWIRTSCHAFTLICHE ARBEITSMASCHINE**

(30) Priorität: 18.09.2023 DE 102023125168
(71) Anmelder: CLAAS Tractor S.A.S., 78141 Vélizy-Villacoublay Cedex (FR)
(72) Erfinder: Faure, Yannick, 92100 Boulogne-Billancourt (FR); Andriamanantena, Vonjinirina, 78140 Vélizy-Villacoublay (FR); Desbois, Frédéric, 78570 ANDRESY (FR); Kla, Mourad, 95100 Argenteuil (FR); Harmouche, Hicham, 78180 Montigny Le Bretonneux (FR); Bahdidi, Abdelhakim, 28000 Chartre (FR); Toubali, Yassine, 92140 Clamart (FR)
(74) Vertreter: CLAAS Gruppe

(57) **Zusammenfassung**

Die vorliegende Erfindung betrifft eine landwirtschaftliche Arbeitsmaschine (1), insbesondere einen Traktor (2), mit einem Motorraum (10) und einer Motorhaube (11). Die Motorhaube (11) umfasst eine Verkleidung (12) und eine Rahmenstruktur (15), wobei die Verkleidung (12) zumindest eine Ausnehmung (13, 13.1, 13.2, 13.3) zur Anordnung zumindest eines Funktionselements (14, 14.1, 14.2, 14.3) umfasst. Die landwirtschaftliche Arbeitsmaschine (1) ist dadurch gekennzeichnet, dass die Verkleidung (12) zumindest ein Zentriermittel (17, 17.1, 17.2, 17.3, 17.4) zur definierten Ausrichtung und Positionierung des Funktionsmittels (14, 14.1, 14.2, 14.3) in der Ausnehmung (13, 13.1, 13.2, 13.3) umfasst, wobei das Zentriermittel (17, 17.1, 17.2, 17.3, 17.4) an zumindest einer inneren Oberfläche (18, 18.1, 18.2, 18.3) der Verkleidung (12) im Randbereich (R, R1, R2, R3) der Ausnehmung (13, 13.1, 13.2, 13.3) angeordnet ist.

## Beschreibung

Die vorliegende Erfindung betrifft eine landwirtschaftliche Arbeitsmaschine gemäß dem Oberbegriff des unabhängigen Patentanspruchs 1.

Landwirtschaftliche Arbeitsmaschinen, beispielsweise Traktoren, werden von einem Antriebsaggregat, beispielsweise in Form einer Verbrennungskraftmaschine und/oder eines oder mehrerer Elektromotoren, angetrieben, welches, neben anderen für den Betrieb der landwirtschaftlichen Arbeitsmaschine erforderlichen Aggregaten, in einem Motorraum angeordnet ist. Zur Abdeckung der im Motorraum angeordneten Aggregate ist eine Motorhaube vorgesehen. Hierdurch können die im Motorraum angeordneten Aggregate vor Verunreinigungen und ein Bediener vor den im Betrieb sich stark erwärmenden Antriebs- und/oder Abgaskomponenten geschützt werden. Zumindest Teile der Motorhaube sind dabei zwischen einer Schließstellung, in der sie den Motorraum und die dort angeordneten Aggregate umschließen, somit schützen, und einer Offenstellung, in der sie einen Zugang zu den im Motorraum angeordneten Aggregaten bereichsweise freigeben, beispielsweise für Wartungszwecke, verlagerbar. Die Motorhaube kann zur Führung eines Luftstroms in den Motorraum zwecks einer Kühlung der im Motorraum angeordneten Aggregate, insbesondere des Antriebsaggregats und der Abgaskomponenten, und zur Führung eines Abwärmeluftstroms aus dem Motorraum in die Umgebung diverse Ausnehmungen umfassen, in welchen Funktionselemente in Gestalt von Lüftungsgittern angeordnet sind. Weiterhin umfasst die Motorhaube in der Regel weitere Ausnehmungen, in welchen Funktionselemente in Gestalt von Beleuchtungseinrichtungen, wie beispielsweise Arbeitsleuchten und/oder Fahrleuchten, angeordnet sind. Der Motorhaube kommt somit neben ihrer Schutzfunktion auch eine Funktion der Halterung von für den Betrieb der landwirtschaftlichen Arbeitsmaschine wesentlichen Funktionselementen zu.

Eine solche herkömmliche Motorhaube für eine als Traktor ausgeführte landwirtschaftliche Arbeitsmaschine, an welcher Funktionselemente, wie Lüftungsgitter und Beleuchtungseinrichtungen, angeordnet sind, ist beispielsweise aus der EP 2 193 947 A1 bekannt.

Die Anordnung und Positionierung solcher Funktionselemente in den hierfür vorgesehenen Ausnehmungen der Motorhaube stellt bei landwirtschaftlichen Arbeitsmaschinen regelmäßig eine Herausforderung dar. Einerseits muss für Zwecke der Funktionssicherheit, insbesondere bei Beleuchtungseinrichtungen, sichergestellt werden, dass die Funktionselemente eine definierte Ausrichtung und Positionierung in der Ausnehmung einnehmen, damit eine oder mehrere Funktionen, für welche das Funktionselement im Betrieb der landwirtschaftlichen Arbeitsmaschine vorgesehen ist, ordnungsgemäß ausgeführt werden. Andererseits ist eine definierte Ausrichtung und Positionierung der Funktionselemente in den Ausnehmungen essenziell für eine ansprechende optische Erscheinung der Motorhaube und somit der landwirtschaftlichen Arbeitsmaschine insgesamt, ein Aspekt, welcher eine Kaufentscheidung seitens eines Kunden in durchaus erheblichem Maße beeinflussen kann. Die Funktionselemente sollten hierfür mit möglichst gleichmäßigen und geringen Spaltmaßen in den Ausnehmungen zentriert angeordnet bzw. montiert sein.

Neben solchen Anforderungen sollte die Motorhaube ferner allerdings auch den im Betrieb der landwirtschaftlichen Arbeitsmaschine auftretenden Belastungen, gleich welcher Natur, standhalten, um einen sicheren Betrieb der landwirtschaftlichen Arbeitsmaschine bei verschiedensten Umgebungseinflüssen zu gewährleisten. Insbesondere solchen Belastungen, die aus Beschleunigungskräften, aus Windgeschwindigkeiten und/oder aus statischen Belastungen im Betrieb der landwirtschaftlichen Arbeitsmaschine resultieren, muss die Motorhaube, zumindest bis zu einem gewissen Grad, standhalten.

Ausgehend hiervon ist es demnach die Aufgabe der vorliegenden Erfindung eine landwirtschaftliche Arbeitsmaschine derart auszugestalten und weiterzubilden, dass deren Motorhaube eine stets zuverlässige, reproduzierbare sowie für die Sicherstellung einer ordnungsgemäßen Funktion sowie für die Sicherstellung eines ansprechenden Erscheinungsbild der landwirtschaftlichen Arbeitsmaschine erforderliche Ausrichtung und Positionierung von Funktionselementen in den hierfür vorgesehenen Ausnehmungen gewährleistet, dabei gleichzeitig den im Betrieb der landwirtschaftlichen Arbeitsmaschine auftretenden Belastungen hinreichend standhält.

Diese Aufgabe wird erfindungsgemäß durch die Merkmale des unabhängigen Patentanspruchs 1 gelöst, wobei vorteilhafte Weiterbildungen der erfindungsgemäßen landwirtschaftlichen Arbeitsmaschine Gegenstand der entsprechenden abhängigen Patentansprüche 2 bis 15 sind.

Demnach betrifft die vorliegende Erfindung eine landwirtschaftliche Arbeitsmaschine, insbesondere einen Traktor, mit einem Motorraum und einer den Motorraum zumindest bereichsweise begrenzenden Motorhaube. Die Motorhaube umfasst eine Verkleidung und eine Rahmenstruktur, wobei die Rahmenstruktur ein erstes Rahmenelement, welches zumindest an einem Maschinenrahmen der landwirtschaftlichen Arbeitsmaschine befestigt ist, und ein zweites Rahmenelement, welches zumindest Teile der Verkleidung trägt, umfasst. Das erste Rahmenelement und das zweite Rahmenelement sind in einem hinteren Bereich der Motorhaube schwenkbar miteinander gekoppelt. Die Verkleidung umfasst zumindest eine Ausnehmung zur Anordnung zumindest eines Funktionselements. Die landwirtschaftliche Arbeitsmaschine ist dadurch gekennzeichnet, dass die Verkleidung zumindest ein Zentriermittel zur definierten Ausrichtung und Positionierung des Funktionsmittels in der Ausnehmung umfasst, wobei das Zentriermittel an zumindest einer inneren Oberfläche der Verkleidung im Randbereich der Ausnehmung angeordnet ist.

Die erfindungsgemäße Ausgestaltung der Verkleidung der Motorhaube mit zumindest einem Zentriermittel erlaubt es die bei einer Anordnung und Positionierung einer Vielzahl an Funktionselementen in den entsprechend hierfür vorgesehenen Ausnehmungen in der Verkleidung der Motorhaube auftretenden Herausforderungen zu überwinden. Durch das Zentrierelement kann eine definierte Ausrichtung und Positionierung erzielt werden, die eine ordnungsgemäße Funktionserfüllung durch das jeweilige Funktionselement im Betrieb der landwirtschaftlichen Arbeitsmaschine erlaubt, ein Aspekt, welcher für einen sicheren Betrieb der landwirtschaftlichen Arbeitsmaschine unabdingbar ist.

Weiterhin wird durch das Zentrierelement ein ansprechendes optisches Erscheinungsbild der Motorhaube und somit der landwirtschaftlichen Arbeitsmaschine insgesamt erzielt, indem die Funktionselemente über das Zentrierelement in der Ausnehmung unter Ausbildung von gleichmäßigen und geringen Spaltmaßen zentriert werden. Die Positionierung des Zentrierelements an einer inneren Oberfläche der Verkleidung sorgt ferner dafür, dass der Bediener der landwirtschaftlichen Arbeitsmaschine diese nicht sieht, wenn er vor der landwirtschaftlichen Arbeitsmaschine mit Blickrichtung auf die Motorhaube steht. Vielmehr fügen sich die Funktionselemente homogen, d.h. ohne komplexe geometrische Formgebungen an der äußeren Oberfläche zur Ausrichtung und Positionierung der Funktionselemente schaffen zu müssen, in die Verkleidung der Motorhaube ein, wodurch eine qualitativ hochwertige Motorhaube erzeugt wird.

Gemäß einer vorteilhaften Weiterbildung der Erfindung ist vorgesehen, dass die Verkleidung eine von dem zweiten Rahmenelement getragene Hauptverkleidung umfasst, welche zumindest eine Ausnehmung umfasst, in der zumindest ein als Beleuchtungseinrichtung ausgebildetes Funktionselement angeordnet ist.

Gemäß einer vorteilhaften Weiterbildung der Erfindung ist vorgesehen, dass die Beleuchtungseinrichtung eine Lichtleiste ist und die Ausnehmung zur Anordnung der Lichtleiste ausgebildet ist, wobei die Hauptverkleidung an einer inneren Oberfläche im Randbereich der Ausnehmung zumindest eine Befestigungsstruktur zum Befestigen der Lichtleiste an der Hauptverkleidung umfasst, welche in Gestalt eines zylindrischen Vorsprungs mit einer Bohrung zur Aufnahme eines Befestigungsmittels ausgebildet ist, wobei das Zentriermittel als zumindest eine an einer Umfangsfläche des Vorsprungs angeordnete Rippe ausgebildet ist.

Vorzugsweise ist vorgesehen, dass die Beleuchtungseinrichtung eine zylindrische Beleuchtungseinrichtung ist und die Ausnehmung zur Anordnung der zylindrischen Beleuchtungseinrichtung ausgebildet ist, wobei das Zentriermittel als eine an einer inneren, einen umfänglichen Rand der Ausnehmung definierenden, Oberfläche der Hauptverkleidung angeordnete Rippe ausgebildet ist.

Weiter vorzugsweise ist vorgesehen, dass die Hauptverkleidung an einer weiteren inneren Oberfläche im Randbereich der Ausnehmung zumindest eine Befestigungsstruktur zum Befestigen der zylindrischen Beleuchtungseinrichtung an der Hauptverkleidung umfasst, welche in Gestalt eines zylindrischen Vorsprungs mit einer Bohrung zur Aufnahme eines Befestigungsmittels ausgebildet ist, wobei die Hauptverkleidung zumindest ein weiteres, an einer Umfangsfläche des Vorsprungs angeordnetes, Zentriermittel umfasst, welches als Rippe ausgebildet ist.

Insbesondere ist vorgesehen, dass die zylindrische Beleuchtungseinrichtung ein Ringelement umfasst, an welchem eine Leuchtmittelanordnung angeordnet ist, wobei das Ringelement an einem außenumfänglichen Rand zumindest ein als Rippe ausgebildetes Positioniermittel umfasst, welches mit dem Zentriermittel und/oder dem weiteren Zentriermittel zur definierten Ausrichtung und Positionierung der zylindrischen Beleuchtungseinrichtung in der Ausnehmung zusammenwirkt.

Die Schaffung von Zentriermitteln an verschiedenen inneren Oberflächen der Hauptverkleidung im Randbereich der verschiedenen Ausnehmungen zur Aufnahme von Beleuchtungseinrichtungen sorgt dafür, dass verschiedenste Beleuchtungseinrichtungen an der Hauptverkleidung der Motorhaube angeordnet werden können. Durch die unterschiedliche Ausgestaltung und Positionierung der Zentriermittel an der jeweiligen inneren Oberfläche im Randbereich der jeweiligen Ausnehmung können diese verschiedenste Geometrien aufweisen und dennoch unkompliziert mit einer definierten Ausrichtung und Positionierung in der Ausnehmung und somit an der Hauptverkleidung angeordnet werden. Die verschiedenen Beleuchtungseinrichtungen müssen lediglich von innen in die jeweilige Ausnehmung eingeführt bzw. eingesteckt werden und mit den verschiedenen inneren Oberflächen der Hauptverkleidung in Anlage gebracht werden, wobei durch die Zentriermittel an der Hauptverkleidung im Bereich der jeweiligen Ausnehmung und die etwaigen Positioniermittel an den Beleuchtungseinrichtungen und/oder aufgrund der Formgebung der Beleuchtungseinrichtungen bei diesem Vorgang automatisch die richtige definierter Ausrichtung und Positionierung der entsprechenden Beleuchtungseinrichtung, die für die Funktionserfüllung und das ansprechende optische Erscheinungsbild wesentlich sind, erzielt.

Gemäß einer vorteilhaften Weiterbildung der Erfindung ist vorgesehen, dass die die Lichtleiste aufnehmende Ausnehmung und die zumindest eine das zylindrische Beleuchtungseinrichtung aufnehmende Ausnehmung in dem die Front der landwirtschaftlichen Arbeitsmaschine bereichsweise definierenden Bereich der Hauptverkleidung in Fahrzeughöhenrichtung übereinanderliegend ausgebildet sind.

Vorzugsweise ist vorgesehen, dass die Hauptverkleidung zwischen den in Fahrzeughöhenrichtung übereinanderliegend ausgebildeten Ausnehmungen bereichsweise unterbrochen ist, wobei an der Hauptverkleidung innenseitig eine die Unterbrechung abschnittsweise überbrückende Stabilisierungsstruktur angeordnet ist.

Durch die in Fahrzeughöhenrichtung übereinander liegende Positionierung der Lichtleiste und der zylindrischen Beleuchtungseinrichtungen kann eine Anordnung dieser Beleuchtungseinrichtungen erzielt werden, die stets eine für den Betrieb der landwirtschaftlichen Arbeitsmaschine, sei es während der Arbeit auf einem Feld oder Hof oder bei einer Straßenfahrt, optimale Ausleuchtung der vorausliegenden und/oder seitlichen Umgebung sicherstellt. Ferner kann durch die Unterbrechung und die die Unterbrechung abschnittsweise überbrückende Stabilisierungsstruktur in der Hauptverkleidung sichergestellt werden, dass stets eine ausreichend große Menge an Luft zur Kühlung der im Motorraum angeordneten Aggregate in den Motorraum einströmen kann, ohne dabei die Belastungsfähigkeit der Motorhaube insgesamt zu beeinträchtigen und ohne die Stabilisierungsstruktur dabei für den Bediener sichtbar zu machen.

Gemäß einer vorteilhaften Weiterbildung der Erfindung ist vorgesehen, dass die Hauptverkleidung an einer inneren Oberfläche im oberen Bereich der Motorhaube eine die Steifigkeit der Hauptverkleidung erhöhende Versteifungsstruktur umfasst.

Vorzugsweise ist vorgesehen, dass die Versteifungsstruktur als integraler Bestandteil der Hauptverkleidung ausgebildet ist.

Weiter vorzugsweise ist vorgesehen, dass die Versteifungsstruktur rippenförmig ausgebildet ist.

Insbesondere ist vorgesehen, dass die Dimensionierung der Versteifungsstruktur auf einem Ergebnis einer Berechnung mittels einer Finite-Elemente-Methode unter Berücksichtigung möglicher im Betrieb der landwirtschaftlichen Arbeitsmaschine auftretender Lastfälle, vorzugsweise einem Beschleunigungslastfall, einem Windgeschwindigkeitslastfall und/oder einem statischen Lastfall, basiert.

Durch die Versteifungsstruktur an der inneren Oberfläche der Hauptverkleidung im oberen Bereich der Motorhaube wird eine hohe Stabilität der Hauptverkleidung bzw. der Motorhaube insgesamt sichergestellt, sodass die Motorhaube selbst einen ausreichenden Widerstand gegen im Betrieb der landwirtschaftlichen Arbeitsmaschine aufgrund von Beschleunigungskräften, Windgeschwindigkeiten und/oder statischen Belastungen, beispielsweise durch ein Besteigen der Motorhaube durch den Bediener zur Reinigung der Kabine, wirkende Kräfte aufweist. Eine integral mit der Hauptverkleidung und rippenförmig ausgebildete Versteifungsstruktur sorgt ferner dafür, dass das die Hauptverkleidung tragende Rahmenelement entsprechend einfach und kompakt ausgestaltet werden kann. Ferner müssen keine großflächigen Bereiche der Hauptverkleidung innenseitig mit zusätzlichen an die Hauptverkleidung angebrachten Stabilisierungsstrukturen, welche insbesondere aus Metall ausgebildet sind, versehen werden.

Gemäß einer vorteilhaften Weiterbildung der Erfindung ist vorgesehen, dass zwischen dem zweiten Rahmenelement und der Hauptverkleidung im Kopplungsbereich der Rahmenelemente miteinander eine Stützstruktur angeordnet ist, wobei die Stützstruktur sowohl an dem zweiten Rahmenelement als auch der Hauptverkleidung befestigt ist.

Vorzugsweise ist vorgesehen, dass die Stützstruktur als zumindest ein plattenförmiges Element ausgebildet ist.

Besonders bevorzugt ist vorgesehen, dass die Stützstruktur als zwei plattenförmige Elemente ausgebildet ist.

Die Stützstruktur sorgt insbesondere dafür, dass im Kopplungsbereich der Rahmenelemente miteinander die Motorhaube zusätzlich stabilisiert es, sodass ein Bediener diesen Bereich für Reinigungsarbeiten und/oder Wartungsarbeiten an der Kabine besteigen kann, ohne dass hierbei die Gefahr besteht, dass sich die Motorhaube aufgrund der durch den Bediener auf diese wirkende Belastung verformt und im schlimmsten Fall beschädigt wird. Ferner kann durch die zusätzliche Stützstruktur eine Deformation der Hauptverkleidung bei einem Öffnung- oder Schließvorgang der Motorhaube vermieden werden, da die Motorhaube im Kopplungsbereich, also in dem Bereich, in dem das erste Rahmenelement und das zweite Rahmenelement schwenkbar miteinander gekoppelt sind, verstärkt ist.

Gemäß einer vorteilhaften Weiterbildung der Erfindung ist vorgesehen, dass die Verkleidung zwei Seitenverkleidungen umfasst, welche jeweils an dem ersten Rahmenelement und/oder dem Maschinenrahmen befestigt sind, wobei jede Seitenverkleidung zumindest eine Ausnehmung umfasst, in der ein als Lüftungsgitter ausgebildetes Funktionselement angeordnet ist.

Vorzugsweise ist vorgesehen, dass das Zentriermittel als eine, an einer inneren Oberfläche einer jeweiligen Seitenverkleidung im Randbereich der Ausnehmung angeordnete, Rippe ausgebildet ist, wobei eine die Ausrichtung und Positionierung des Lüftungsgitters definierende Oberfläche der Rippe parallel zum Rand der Ausnehmung verlaufend ausgerichtet ist.

Die Schaffung von Zentriermitteln an einer inneren Oberfläche der Seitenverkleidung im Randbereich der Ausnehmung zur Aufnahme eines Lüftungsgitters sorgt dafür, dass auch Lüftungsgitter egal welcher geometrischen Ausgestaltung mit einer definierten Ausrichtung und Positionierung in der Ausnehmung und somit an der jeweiligen Seitenverkleidung angeordnet werden können. Auch hier müssen die Lüftungsgitter lediglich von innen in die jeweilige Ausnehmung eingeführt bzw. eingesteckt werden und mit den verschiedenen inneren Oberflächen der Hauptverkleidung in Anlage gebracht werden, wobei durch das Zentriermittel, insbesondere die Ausrichtung der Oberfläche des Zentriermittels, bei diesem Vorgang automatisch die richtige definierte Ausrichtung und Positionierung der entsprechenden Beleuchtungseinrichtung, erzielt wird.

Gemäß einer vorteilhaften Weiterbildung der Erfindung ist vorgesehen, dass an einer inneren Oberfläche einer jeweiligen Seitenverkleidung im Randbereich der Seitenverkleidung zumindest eine Befestigungsstruktur zum Befestigen der Seitenverkleidung an dem ersten Rahmenelement und/oder dem Maschinenrahmen angeordnet ist, wobei die Befestigungsstruktur zwei auf der inneren Oberfläche parallel zueinander angeordnete Stege sowie ein mittels der Stege gehaltertes Befestigungsmittel umfasst, wobei die Stege jeweils an einem Ende eine Erhöhung umfassen, wobei die Erhöhungen an jeweils einander gegenüberliegenden Enden der Stege ausgebildet sind, wobei das Befestigungsmittel einen Halterungsabschnitt und einen Befestigungsabschnitt umfasst, wobei der Halterungsabschnitt bereichsweise zwischen den Stegen aufgenommen ist und eine Sicherung des Halterungsabschnitts an den Stegen über eine Änderung der Ausrichtung des Befestigungsmittels relativ zu den Stegen erfolgt.

Insbesondere ist vorgesehen, dass der Befestigungsabschnitt in Gestalt einer Klemme ausgeführt ist.

Die Anordnung von Befestigungsstrukturen innenseitig der Seitenverkleidungen sorgt auf besonders einfache Weise dafür, dass die Seitenverkleidungen an dem ersten Rahmenelement und/oder dem Maschinenrahmen lösbar befestigt werden können. Durch die spezielle Ausgestaltung der Befestigungsstrukturen kann ferner sichergestellt werden, dass das Befestigungsmittel stets mit einer definierten Ausrichtung relativ zum Seitenverkleidung angeordnet werden kann, wodurch die Montage der Seitenverkleidungen an dem ersten Rahmenelement und/oder dem Maschinenrahmen besonders unkompliziert, also mit wenig Aufwand, dabei allerdings hochpräzise erfolgen kann.

Die vorliegende Erfindung wird nachstehend anhand der in den Figuren abgebildeten Ausführungsformen näher beschrieben.

Es zeigen:
- FIG. 1: eine schematische und exemplarische Darstellung einer erfindungsgemäßen landwirtschaftlichen Arbeitsmaschine in Gestalt eines Traktors;
- FIG. 2: eine schematische und exemplarische Darstellung einer Motorhaube der landwirtschaftlichen Arbeitsmaschine aus FIG. 1;
- FIG. 3: eine schematische und exemplarische Darstellung einer Ausnehmung zur Anordnung einer Lichtleiste in einer Hauptverkleidung der Motorhaube aus FIG. 2;
- FIG. 4: eine schematische und exemplarische Darstellung eines im Randbereich der Ausnehmung aus FIG. 3 angeordneten Zentriermittels;
- FIG. 5: eine schematische und exemplarische Darstellung einer Ausnehmung zur Anordnung einer zylindrischen Beleuchtungseinrichtung in einer Hauptverkleidung der Motorhaube aus FIG. 2 mit einem darin angeordneten Ringelement der Beleuchtungseinrichtung;
- FIG. 6: eine schematische und exemplarische Darstellung einer Versteifungsstruktur und einer Stützstruktur der Motorhaube;
- FIG. 7: eine schematische und exemplarische Darstellung einer Befestigungsstruktur zum Befestigen einer Seitenverkleidung der Motorhaube aus FIG. 2; und
- FIG. 8: eine schematische und exemplarische Darstellung einer Ausnehmung zur Anordnung eines Lüftungsgitters in einer Seitenverkleidung der Motorhaube aus FIG. 2 mit einem im Randbereich der Ausnehmung angeordneten Zentriermittel.

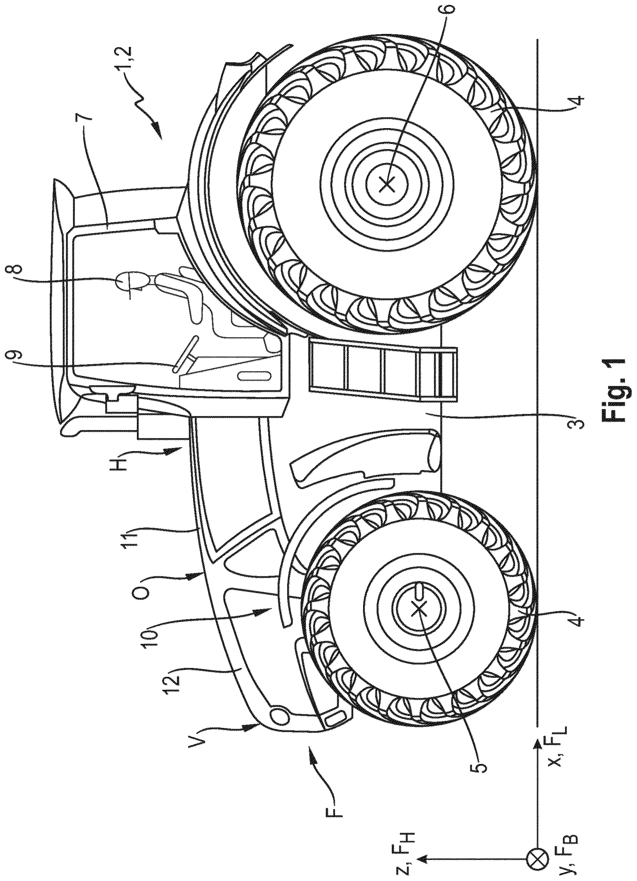

FIG. 1 zeigt eine erfindungsgemäße landwirtschaftliche Arbeitsmaschine 1 in Gestalt eines Traktors 2, wobei der grundsätzliche Aufbau eines Traktors 2 als dem Fachmann bekannt angesehen wird. Der Traktor 2 kann anhand von drei Erstreckungsrichtungen räumlich definiert werden, die durch ein Koordinatensystem in FIG. 1 kenntlich gemacht sind. Die erste Erstreckungsrichtung ist dabei die Längsrichtung der landwirtschaftlichen Arbeitsmaschine 1, im Folgenden auch als Fahrzeuglängsrichtung F_{L} bezeichnet, die in x-Achsenrichtung verläuft, die zweite Erstreckungsrichtung ist die Breitenrichtung der landwirtschaftlichen Arbeitsmaschine 1, im Folgenden auch als Fahrzeugbreitenrichtung F_{B} bezeichnet, die in y-Achsenrichtung verläuft, und die dritte Erstreckungsrichtung ist die Höhenrichtung der landwirtschaftlichen Arbeitsmaschine 1, im Folgenden auch als Fahrzeughöhenrichtung F_{H} bezeichnet, die in z-Achsenrichtung verläuft.

Der Traktor 2 umfasst unter anderem einen Maschinenrahmen 3, Bodeneingriffsmittel 4, die einer Vorderachse 5 und einer Hinterachse 6 zugeordnet sind, sowie eine auf dem Maschinenrahmen 3 gelagerte Kabine 7. In der Kabine 7 kann sich ein Bediener 8 des Traktors 2 zur Steuerung derselben aufhalten kann. Hierzu ist innerhalb der Kabine 7 üblicherweise eine Bedien- und Steuereinrichtung 9 zur Bedienung und Steuerung des Traktors 2, beispielsweise in Gestalt eines Lenkrads und/oder Joysticks ausgeführt, angeordnet. Zum Antrieb und zur Bereitstellung der zum Betrieb des Traktors 2 benötigten Leistung weist der Traktor 2 ein - in den FIGs. nicht dargestelltes - Antriebsaggregat, beispielsweise in Gestalt eines Verbrennungsmotors und/oder eines oder mehrerer Elektromotoren ausgeführt, auf. Zur Kühlung des Antriebsaggregats kann ferner eine - in den FIGs. ebenfalls nicht dargestellte - Kühlereinheit vorgesehen sein, welche beispielsweise einen Lüfter und einen Kühler zur Kühlung des Antriebsaggregats umfassen kann.

Zumindest das Antriebsaggregat und die Kühlereinheit sind zusammen in einem Motorraum 10 angeordnet, wobei der Motorraum 10 durch eine Motorhaube 11 zumindest bereichsweise begrenzt bzw. umschlossen ist. Zumindest bereichsweise begrenzt bzw. umschlossen bedeutet in diesem Zusammenhang, dass in einer Verkleidung 12 der Motorhaube 11 eine oder mehrere Ausnehmungen 13 ausgebildet sind, die der Anordnung von Funktionselementen 14, beispielsweise von Beleuchtungseinrichtungen und/oder Lüftungsgittern, an der Motorhaube 11 dienen. Weiterhin ist hierunter auch zu verstehen, dass gewisse Bereiche des Motorraums 10 auch vom Maschinenrahmen 3 und/oder anderen strukturellen Komponenten des Traktors 2 begrenzt bzw. umschlossen sein können.

An der Motorhaube 11 ist vorzugsweise eine als Lichtleiste 14.1 ausgebildete Beleuchtungseinrichtung angeordnet, wobei die Verkleidung 12 eine Ausnehmung 13.1 umfasst, die zur Anordnung der Lichtleiste 14.1 ausgebildet ist. Die Lichtleiste 14.1 kann eine Arbeitsleuchte für den Nahbereich, eine Arbeitsleuchte für den Fernbereich und/oder eine Tagfahrleuchte umfassen. Ferner sind an der Motorhaube 11 vorzugsweise eine oder mehrere als zylindrische Beleuchtungseinrichtungen 14.2 ausgebildete Beleuchtungseinrichtungen angeordnet, wobei die Verkleidung 12 eine oder mehrere Ausnehmungen 13.2 umfasst, die zur Anordnung der zylindrischen Beleuchtungseinrichtungen 14.2 ausgebildet sind. Die zylindrischen Beleuchtungseinrichtungen 14.2 können jeweils eine oder mehrere Leuchten für ein Standlicht, ein Abblendlicht und/oder ein Fernlicht umfassen. Weiterhin sind an der Motorhaube 11 vorzugsweise ein oder mehrere Lüftungsgitter 14.3 angeordnet, wobei die Verkleidung 12 eine oder mehrere Ausnehmungen 13.3 umfasst, die zur Anordnung der Lüftungsgitter 14.3 ausgebildet sind. Durch die Lüftungsgitter 14.3 können Luftströme in den oder aus dem Motorraum 10 hinein- oder herausströmen.

Die Motorhaube 11 umfasst neben der Verkleidung 12 eine Rahmenstruktur 15. Die Rahmenstruktur 15 ist zweiteilig ausgebildet. Die Rahmenstruktur 15 umfasst demnach ein erstes - in den FIGs. nicht dargestelltes - Rahmenelement und ein zweites Rahmenelement 16. Das erste Rahmenelement ist zumindest an dem Maschinenrahmen 3 des Traktors 2 befestigt, vorzugsweise mit dem Maschinenrahmen 3 verschraubt, könnte zusätzlich allerdings auch an einem in dem Motorraum 10 angeordneten Aggregat befestigt sein. Das zweite Rahmenelement 16 trägt zumindest Teile der Verkleidung 12 der Motorhaube 11. Das erste Rahmenelement und das zweite Rahmenelement 16 der Rahmenstruktur 15 der Motorhaube 11 sind in einem hinteren Bereich H der Motorhaube 11, nahe der Kabine 7 des Traktors 2, schwenkbar miteinander gekoppelt bzw. verbunden, sodass das zweite Rahmenelement 16 relativ zum ersten Rahmenelement reversibel zwischen einer ersten Stellung, die einer Schließstellung der Motorhaube 11 entspricht, und einer zweiten Stellung, die einer Offenstellung der Motorhaube 11 entspricht, verschwenkbar ist bzw. verschwenkt werden kann. Teile der Motorhaube 11 sind demnach mittels der Rahmenstruktur zwischen der Schließstellung, in der die Motorhaube 11 die im Motorraum 10 angeordneten Aggregate begrenzt bzw. umschließt, und der Offenstellung, in der die Motorhaube 11 zumindest bereichsweise einen Zugang zum Motorraum 10 und den darin angeordneten Aggregaten freigibt bzw. ermöglicht, verschwenkbar und dabei vorzugsweise in jeder dieser Endpositionen definierenden Stellungen arretierbar. Die FIG. 1 zeigt die Motorhaube 11 des Traktors 2 in einer Schließstellung.

Die Verkleidung 12 der Motorhaube 11 des Traktors 2 umfasst eine Hauptverkleidung 12.1, welche von dem zweiten Rahmenelement 16 der Rahmenstruktur 15 getragen wird, und somit zwischen der Schließstellung und der Offenstellung verschwenkt werden kann. Die Verkleidung 12 umfasst weiterhin zwei Seitenverkleidungen 12.2, von denen in den FIGs. allerdings nur eine dargestellt ist. Die Seitenverkleidungen 12.2 werden jeweils an dem ersten Rahmenelement der Rahmenstruktur 15 und/oder dem Maschinenrahmen 3 des Traktors 2 befestigt. Die Hauptverkleidung 12.1 umfasst zumindest eine Ausnehmung 13.1, 13.2, in welcher ein als Beleuchtungseinrichtung 14.1,14.2 ausgebildetes Funktionselement 14 angeordnet ist. Die Seitenverkleidungen 12.2 umfassen jeweils ebenfalls zumindest eine Ausnehmung 13.3, in welcher ein als Lüftungsgitter 14.3 ausgebildetes Funktionselement 14 angeordnet ist. Die Hauptverkleidung 12.1 und auch die Seitenverkleidungen 12.2 können ferner weitere Ausnehmungen 13 zur Anordnung von Funktionselementen 14 umfassen, auf welche im Folgenden allerdings nicht eingegangen wird.

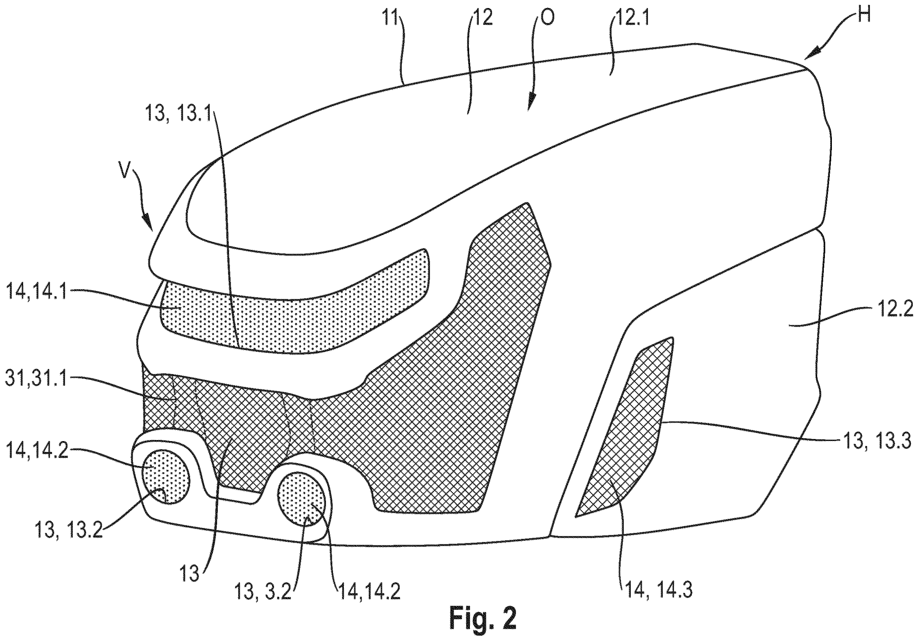

Wie in FIG. 2 dargestellt, umfasst die Hauptverkleidung 12.1 eine Lichtleiste 14.1, die in einer Ausnehmung 13.1 angeordnet ist, wobei die Ausnehmung 13.1 zur Anordnung der Lichtleiste 14.1 ausgebildet ist. Ferner umfasst die Hauptverkleidung 12.1 2 zylindrische Beleuchtungseinrichtungen 14.2, die jeweils in einer Ausnehmung 13.2 angeordnet sind, wobei die Ausnehmungen 13.2 jeweils zur Anordnung einer zylindrischen Beleuchtungseinrichtung 14.2 ausgebildet sind. Die die Lichtleiste 14.1 aufnehmende Ausnehmung 13.1 und die beiden jeweils eine zylindrische Beleuchtungseinrichtung 14.2 aufnehmenden Ausnehmungen 13.2 sind dabei in dem die Front F des Traktors 2 bereichsweise definierenden Bereich der Hauptverkleidung 12.1, welcher sich in einem vorderen Bereich V der Motorhaube 11 befindet, in Fahrzeughöhenrichtung F_{H} übereinanderliegend ausgebildet bzw. angeordnet.

Wesentlich ist nunmehr, dass die Verkleidung 12 der Motorhaube 11 zumindest ein Zentriermittel 17 zur definierten Ausrichtung und Positionierung eines Funktionselements 14 in einer entsprechend hierfür vorgesehenen Ausnehmung 13 in der Verkleidung 12 umfasst. Dieses Zentriermittel 17 ist dabei an zumindest einer inneren Oberfläche 18, also einer an den Motorraum 10 angrenzenden Oberfläche, der Verkleidung 12 im Randbereich R der jeweiligen Ausnehmung 13 angeordnet. Das zumindest eine Zentriermittel 17 dient dazu, ein jeweiliges Funktionselementen 14 in einer hierfür vorgesehenen Ausnehmung 13 in der Verkleidung 12 der Motorhaube 11 stets zuverlässig, ohne großen Aufwand, so auszurichten und zu positionieren, dass die ordnungsgemäße Funktionsausführung durch das Funktionselement 14 im Betrieb des Traktors 2 sichergestellt ist sowie ein ansprechendes optisches Erscheinungsbild des Traktors 2 aufgrund von geringen und gleichmäßigen Spaltbreiten gewährleistet wird.

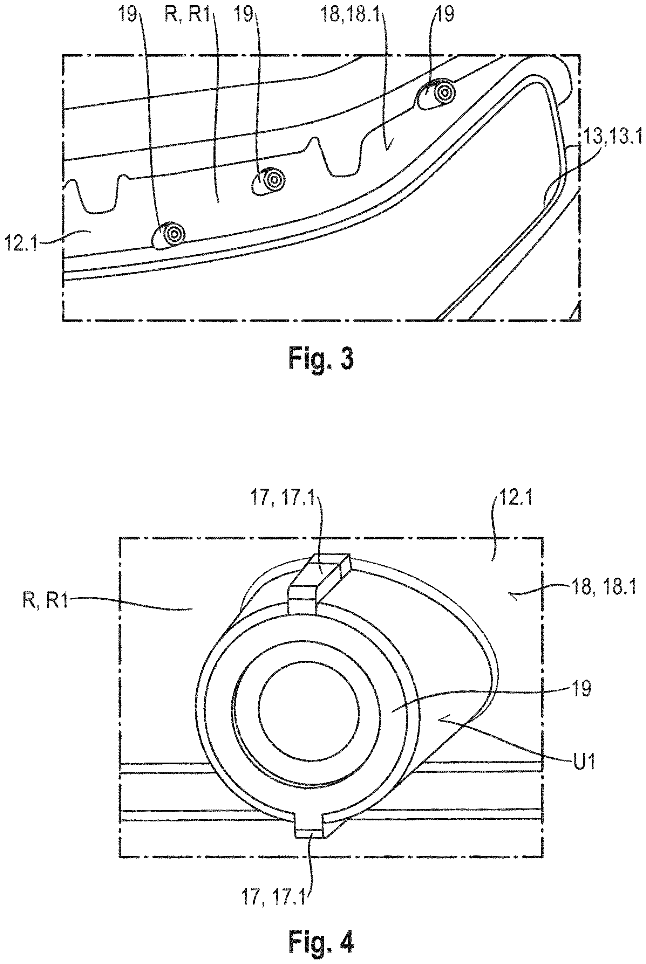

Bezugnehmend auf die FIGs. 3 und 4 wird nunmehr die definierte Ausrichtung und Positionierung der Lichtleiste 14.1 in der hierfür vorgesehenen Ausnehmung 13.1 in der Hauptverkleidung 12.1 der Motorhaube 11 beschrieben. Die Hauptverkleidung 12.1 umfasst an einer inneren Oberfläche 18.1 im Randbereich R1 der Ausnehmung 13.1 eine oder mehrere Befestigungsstrukturen 19 zum Befestigen der Lichtleiste 14.1 an der Hauptverkleidung 12.1. Die Befestigung der Lichtleiste 14.1 an der Hauptverkleidung 12.1 erfolgt demnach innenseitig der Hauptverkleidung 12.1, wodurch die Befestigung für den Bediener 8 von außen nicht sichtbar ist. Vielmehr fügt sich die Lichtleiste 14.1 homogen in die Hauptverkleidung 12.2 der Motorhaube 11 ein. Die Befestigungsstrukturen sind jeweils in Gestalt eines zylindrischen Vorsprungs mit einer zentralen Bohrung zur Aufnahme eines Befestigungsmittel zum Befestigen der Lichtleiste 14.1 an der Hauptverkleidung 12.1 ausgebildet. Damit die Lichtleiste 14.1 in der Ausnehmung 13.1 definiert ausgerichtet und positioniert werden kann, umfasst die Hauptverkleidung 12.1 ein oder mehrere Zentriermittel 17.1. Das Zentriermittel 17.1 ist als zumindest eine Rippe, vorzugsweise zwei einander gegenüberliegende Rippen, an einer Umfangsfläche U1 einer jeweiligen als Vorsprung ausgebildeten Befestigungsstruktur 19 ausgebildet bzw. angeordnet. Die Lichtleiste 14.1 umfasst - in den FIGs. nicht dargestellte - Strukturen die mit den an den Befestigungsstrukturen 19 ausgebildeten Zentriermitteln 17.1 zur definierten Ausrichtung und Positionierung der Lichtleiste 14.1 in der Ausnehmung 13.1 zusammenwirken.

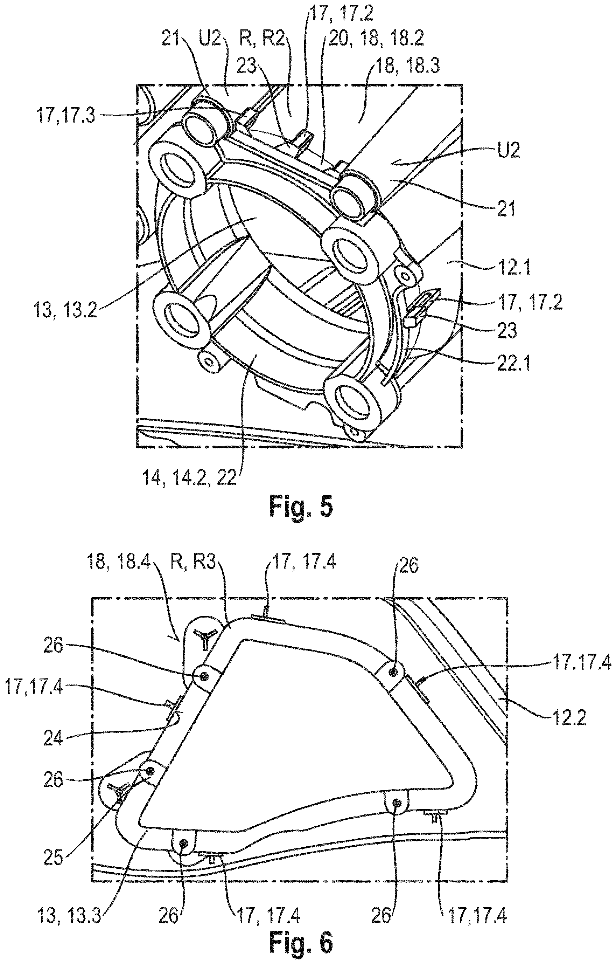

Bezugnehmend auf die FIGs. 5 wird nunmehr die definierte Ausrichtung und Positionierung der zylindrischen Beleuchtungseinrichtungen 14.2 in der hierfür vorgesehenen Ausnehmungen 13.2 in der Hauptverkleidung 12.1 der Motorhaube 11 beschrieben. Die Hauptverkleidung 12.1 umfasst ein oder mehrere Zentriermittel 17.2 zur definierten Ausrichtung und Positionierung der zylindrischen Beleuchtungseinrichtungen 14.2. Das oder die Zentriermittel 17.2 sind dabei als eine an einer inneren, einen umfänglichen Rand 20 der Ausnehmung 13.2 definierenden Oberfläche 18.2, der Hauptverkleidung 12.1 angeordnete Rippe ausgebildet. Die Hauptverkleidung 12.1 umfasst ferner an einer weiteren inneren Oberfläche 18.3 im Randbereich R2 der Ausnehmung 13.2 eine oder mehrere Befestigungsstrukturen 21 zum Befestigen der zylindrischen Beleuchtungseinrichtungen 14.2 an der Hauptverkleidung 12.1. Auch diese Befestigungsstrukturen 21 sind jeweils in Gestalt eines zylindrischen Vorsprungs mit einer zentralen Bohrung zur Aufnahme eines Befestigungsmittel zum Befestigen der zylindrischen Beleuchtungseinrichtungen 14.2 an der Hauptverkleidung 12.1 ausgebildet. Die Hauptverkleidung 12.1 umfasst neben den Zentriermitteln 17.2 weitere Zentriermittel 17.3, welche an einer Umfangsfläche U2 einer jeweiligen als Vorsprung ausgebildeten Befestigungsstruktur 21 ausgebildet bzw. angeordnet sind. Auch diese Zentriermittel 17.3 sind jeweils als Rippe ausgebildet. Jede zylindrische Beleuchtungseinrichtung 14.2 umfasst ein Ringelement 22, an welchem eine - in den FIGs. nicht dargestellte - Leuchtmittelanordnung, die beispielsweise die eine oder mehreren Leuchten für ein Standlicht, ein Abblendlicht und/oder ein Fernlicht umfasst, angeordnet ist. Das Ringelement 22 umfasst ein oder mehrere an einem außenumfänglichen Rand 22.1 als Rippe ausgebildete Positioniermittel 23. Die Positioniermittel 23 wirken mit den Zentriermittel 17.2 und/oder den weiteren Zentriermittel 17.3 zur definierten Ausrichtung und Positionierung der jeweiligen zylindrischen Beleuchtungseinrichtung 14.2 in der jeweiligen Ausnehmung 13.2 zusammen.

Bezugnehmend auf die FIGs. 6 wird nunmehr die definierte Ausrichtung und Positionierung des Lüftungsgitter 14.3 in der hierfür vorgesehenen Ausnehmung 13.3 in einer jeweiligen Seitenverkleidung 12.2 der Motorhaube 11 beschrieben. Auch die Seitenverkleidungen 12.2 der Motorhaube 11 umfassen jeweils ein oder mehrere Zentriermittel 17.4. Diese Zentriermittel 17.4 sind jeweils als eine, an einer inneren Oberfläche 18.4 einer jeweiligen Seitenverkleidung 12.2 im Randbereich R3 der Ausnehmung 13.3 angeordnete, Rippe ausgebildet. Die Rippen sind dabei vorzugsweise T-förmig ausgestaltet, wobei eine die Ausrichtung und Positionierung des Lüftungsgitters 14.3 definierenden Oberfläche 24 einer jeden Rippe parallel zum Rand 25 der Ausnehmung 13.3 verlaufend ausgerichtet ist. Mit anderen Worten, das Lüftungsgitter 14.3 liegt in einem in der Ausnehmung 13.3 angeordneten Zustand mit einem Randbereich an der Oberfläche 24 der Zentriermittel 17.4 an und wird hierdurch definiert in der Ausnehmung 13.3 ausgerichtet und positioniert. Die Befestigung des Lüftungsgitters 14.3 erfolgt über im Randbereich R3 der Ausnehmung 13.3 ausgebildete bzw. angeordnete Befestigungsstrukturen 26.

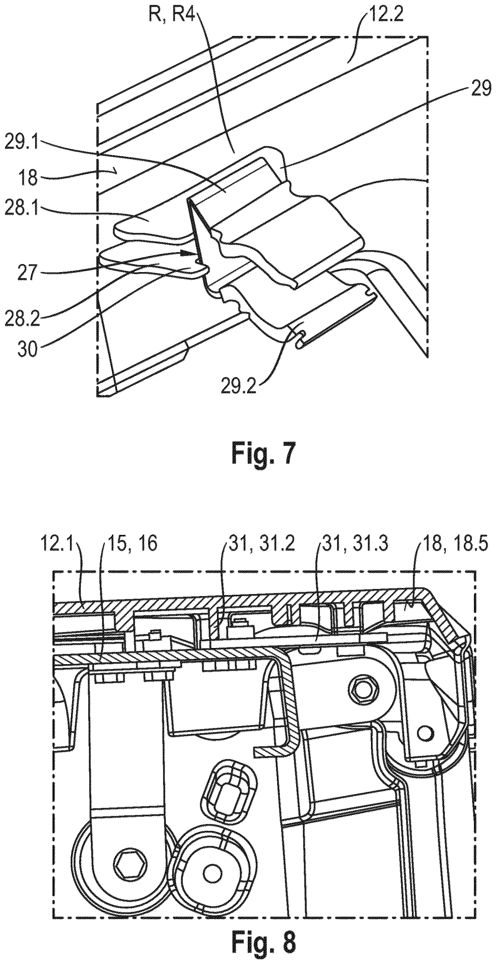

Neben den Zentriermittel 17.4 können an der inneren Oberfläche 18.4 und/oder an einer weiteren inneren Oberfläche einer jeweiligen Seitenverkleidung 12.2 im Randbereich R4 der Seitenverkleidung 12.2 eine oder mehrere weitere Befestigungsstrukturen 27 ausgebildet bzw. angeordnet sein. Eine solche Befestigungsstruktur 27 ist beispielsweise in FIG. 7 dargestellt. Die Befestigungsstrukturen 27 dienen der Befestigung der jeweiligen Seitenverkleidung 12.2 an dem ersten Rahmenelement und/oder dem Maschinenrahmen 3 des Traktors 2. Die Seitenverkleidungen 12.2 werden demnach nicht gemeinsam mit der Hauptverkleidung 12.1 über die Rahmenstruktur 15 bei einem Öffnung- oder Schließvorgang der Motorhaube 11 verschwenkt. Die Befestigungsstrukturen 27 umfassen jeweils zwei auf der inneren Oberfläche 18.4 und/oder der weiteren inneren Oberfläche parallel zueinander angeordnete Stege 28.1, 28.2. Neben den Stegen 28.1, 28.2 umfassen die Befestigungsstrukturen 27 jeweils ein mittels der Stege 28.1, 28.2 gehaltertes bzw. befestigtes Befestigungsmittel 29. Das Befestigungsmittel 29 umfasst einen Halterungsabschnitt 29.1, über den das Befestigungsmittel 29 an den Stegen 28.1, 28.2 gehaltert bzw. befestigt wird. Neben dem Halterungsabschnitt 29.1 umfasst das Befestigungsmittel 29 einen Befestigungsabschnitt 29.2, über den das Befestigungsmittel 29 und somit die jeweilige Seitenverkleidung 12.2 an dem ersten Rahmenelement und/oder dem Maschinenrahmen 3 des Traktors 2 befestigt wird. Der Befestigungsabschnitt 29.2 ist dabei vorzugsweise in Gestalt einer Klemme ausgeführt, sodass die Seitenverkleidungen 12.2 jeweils lösbar an dem ersten Rahmenelement und/oder dem Maschinenrahmen 3 des Traktors 2 befestigt werden können. Die Stege 28.1, 28.2 umfassen jeweils an einem Ende eine Erhöhung 30, wobei die Erhöhungen 30 an jeweils einander gegenüberliegenden Enden der Stege 28.1, 28.2 ausgebildet sind. Der Halterungsabschnitt 29.1 ist bereichsweise zwischen den Stegen 28.1, 28.2 aufgenommen. Zur Sicherung bzw. Befestigung des Halterungsabschnitt 29.1 an den Stegen 28.1, 28.2 wird die Ausrichtung des Befestigungsmittels 29 relativ zu den Stegen 28.1, 28.2 geändert. Mit anderen Worten, dass Befestigungselement wird mit einer ersten Ausrichtung auf die Stege 28.1, 28.2 aufgesetzt, sodass der Halterungsabschnitt 29.1 bereichsweise von den Stegen 28.1, 28.2 aufgenommen ist. Anschließend wird die Ausrichtung des Befestigungsmittels 29 relativ zu den Stegen 28.1, 28.2 geändert, wodurch sich auch die Ausrichtung des Halterungsabschnitt 29.1 relativ zu den Stegen 28.1, 28.2 ändert. Der Halterungsabschnitt 29.1 gelang nach Abschluss der Änderung der Ausrichtung, welche beispielsweise durch ein einfaches Drehen des Befestigungsmittels 29, vorzugsweise um 90°, erfolgt, mit den Erhöhungen 30, welche Anschläge für den Halterungsabschnitt 29.1 definieren, in Anlage, wodurch das Befestigungsmittel 29 über die Stege 28.1, 28.2 an der jeweiligen Seitenverkleidung 12.2 gesichert bzw. befestigt ist.

Damit die Motorhaube 11 den im Betrieb des Traktors 2 auftretenden Belastungen standhält, kann die Motorhaube 11 verschiedene Strukturen 31 umfassen.

Sofern beispielsweise, wie in FIG. 2 dargestellt, die Hauptverkleidung 12.1 der Motorhaube 11 zwischen den in Fahrzeughöhenrichtung F_{H} übereinanderliegend ausgebildeten bzw. angeordneten Ausnehmungen 13.1, 13.2 bereichsweise unterbrochen ist, um beispielsweise einer ausreichend große Luftzufuhr über eine weitere durch die Unterbrechung ausgebildete Ausnehmung 13 in den Motorraum 10 sicherzustellen, kann an der Hauptverkleidung 12.1 innenseitig eine die Unterbrechung abschnittsweise überbrückende Stabilisierungsstruktur 31.1 angeordnet sein. Eine solche Stabilisierungsstruktur 31.1 ist vorzugsweise derart ausgestaltet, dass diese zwei jeweils die Unterbrechung zwischen der Ausnehmung 13.1 und einer Ausnehmung 13.2 überbrückende Schenkel sowie eine die Schenkel miteinander verbindende Strebe umfasst. Die Stabilisierungsstruktur 31.1 wird über die Schenkel und die strebe innenseitig an der Hauptverkleidung 12.1 befestigt. Die Stabilisierungsstruktur 31.1 ist von einem weiteren Lüftungsgitter überdeckt, sodass der Bediener 8 die Stabilisierungsstruktur 31.1 im geschlossenen Zustand der Motorhaube 11 nicht wahrnehmen kann.

Weiterhin kann die Hauptverkleidung 12.1 an einer inneren Oberfläche 18.5 im oberen Bereich oder Motorhaube 11 eine die Steifigkeit der Hauptverkleidung 12.1 erhöhende Versteifungsstruktur 31.2 umfassen. Die Versteifungsstruktur 31.2 ist vorzugsweise als integraler Bestandteil der Hauptverkleidung 12.1 ausgebildet. Alternativ könnte die Versteifungsstruktur 31.2 auch als zusätzliche Komponente an der innen liegenden Oberfläche 18.5 der Hauptverkleidung 12.1 befestigt werden. Die Versteifungsstruktur 31.2 ist wie in FIG. 8 dargestellt vorzugsweise rippenförmig ausgebildet. Die Dimensionierung der Versteifungsstruktur 31.2 basiert auf einem Ergebnis einer Berechnung mittels einer Finite-Elemente-Methode unter Berücksichtigung möglicher im Betrieb des Traktors 2 auftretender Lastfälle. Bei solchen Lastfällen handelt es sich insbesondere um einen Beschleunigungslastfall, einen Windgeschwindigkeitslastfall und/oder einen statischen Lastfall, bei dem beispielsweise der Bediener zur Reinigung der Kabine 7 auf der Motorhaube 11 steht.

Abschließend kann die Hauptverteilung 12.1, wie ebenfalls in FIG. 8 dargestellt, eine zwischen dem zweiten Rahmenelement 16 der Rahmenstruktur und der Hauptverkleidung 12.1 im Kopplungsbereich der Rahmenelemente miteinander eine Stützstruktur 31.3 angeordnet sein. Die Stützstruktur 31.3 ist sowohl einen zweiten Rahmenelement 16 als auch an der Hauptverkleidung 12.1 befestigt. Die Befestigung erfolgt vorzugsweise über eine Verschraubung der Stützstruktur 31.3 sowohl mit der Hauptverkleidung 12.1 als auch mit dem zweiten Rahmenelement 16. Die Stützstruktur 31.3 ist vorzugsweise als plattenförmiges Element oder aber als zwei plattenförmige Elemente und aus einem Metall, vorzugsweise einem Stahl, ausgebildet.

Abschließend sei angemerkt, dass die vorstehend beschriebenen Ausführungsformen lediglich zur Beschreibung der beanspruchten Lehre dienen, diese jedoch keinesfalls als einschränkend oder erschöpfend anzusehen sind.

**Bezugszeichenliste**

| | | | |
|---|---|---|---|
| 1 | Landwirtschaftliche Arbeitsmaschine | 17 | Zentriermittel |
| | | 17.1 | Zentriermittel |
| 2 | Traktor | 17.2 | Zentriermittel |
| 3 | Maschinenrahmen | 17.3 | Zentriermittel |
| 4 | Bodeneingriffsmittel | 17.4 | Zentriermittel |
| 5 | Vorderachse | 18 | Innere Oberfläche der Verkleidung |
| 6 | Hinterachse | | |
| 7 | Kabine | 18.1 | Innere Oberfläche der Hauptverkleidung |
| 8 | Bediener | | |
| 9 | Bedien- und Steuereinrichtung | 18.2 | Innere Oberfläche der Hauptverkleidung |
| 10 | Motorraum | 18.3 | Innere Oberfläche der Hauptverkleidung |
| 11 | Motorhaube | | |
| 12 | Verkleidung | 18.4 | Innere Oberfläche der Seitenverkleidung |
| 12.1 | Hauptverkleidung | | |
| 12.2 | Seitenverkleidung | 18.5 | Innere Oberfläche der Hauptverkleidung |
| 13 | Ausnehmung | | |
| 13.1 | Ausnehmung für Lichtleiste | 19 | Befestigungsstruktur |
| 13.2 | Ausnehmung für zylindrische Beleuchtungseinrichtung | 20 | Rand |
| | | 21 | Befestigungsstruktur |
| 13.3 | Ausnehmung für Lüftungsgitter | 22 | Ringelement |
| | | 22.1 | Rand |
| 14 | Funktionselement | 23 | Positioniermittel |
| 14.1 | Lichtleiste | 24 | Oberfläche Zentriermittel |
| 14.2 | Zylindrische Beleuchtungseinrichtung | 25 | Rand |
| | | 26 | Befestigungsstruktur |
| 14.3 | Lüftungsgitter | 27 | Befestigungsstruktur |
| 15 | Rahmenstruktur | 28.1, 28.2 | Steg |
| 16 | Zweites Rahmenelement | 29 | Befestigungsmittel |
| 29.1 | Halterungsabschnitt | H | Hinterer Bereich der Motorhaube |
| 29.2 | Befestigungsabschnitt | | |
| 30 | Erhöhung | V | Vorderer Bereich der Motorhaube |
| 31 | Struktur | O | Oberer Bereich der Motorhaube |
| 31.1 | Stabilisierungsstruktur | | |
| 31.2 | Versteifungsstruktur | F | Front der landwirtschaftlichen Arbeitsmaschine |
| 31.3 | Stützstruktur | | |
| | | R | Randbereich |
| F_{L} | Fahrzeuglängsrichtung | R1 bis R4 | Randbereich |
| F_{B} | Fahrzeugbreitenrichtung | U1, U2 | Umfangsfläche |
| F_{H} | Fahrzeughöhenrichtung | | |

## Patentansprüche

1. Landwirtschaftliche Arbeitsmaschine (1), insbesondere Traktor (2), mit einem Motorraum (10) und einer den Motorraum (10) zumindest bereichsweise begrenzenden Motorhaube (11), wobei die Motorhaube (11) eine Verkleidung (12) und eine Rahmenstruktur (15) umfasst, wobei die Rahmenstruktur (15) ein erstes Rahmenelement, welches zumindest an einem Maschinenrahmen (3) der landwirtschaftlichen Arbeitsmaschine (1) befestigt ist, und ein zweites Rahmenelement (16), welches zumindest Teile der Verkleidung (12) trägt, umfasst, wobei das erste Rahmenelement und das zweite Rahmenelement (16) in einem hinteren Bereich (H) der Motorhaube (11) schwenkbar miteinander gekoppelt sind, wobei die Verkleidung (12) zumindest eine Ausnehmung (13, 13.1, 13.2, 13.3) zur Anordnung zumindest eines Funktionselements (14, 14.1, 14.2, 14.3) umfasst, **dadurch gekennzeichnet, dass** die Verkleidung (12) zumindest ein Zentriermittel (17, 17.1, 17.2, 17.3, 17.4) zur definierten Ausrichtung und Positionierung des Funktionsmittels (14, 14.1, 14.2, 14.3) in der Ausnehmung (13, 13.1, 13.2, 13.3) umfasst, wobei das Zentriermittel (17, 17.1, 17.2, 17.3, 17.4) an zumindest einer inneren Oberfläche (18, 18.1, 18.2, 18.3) der Verkleidung (12) im Randbereich (R, R1, R2, R3) der Ausnehmung (13, 13.1, 13.2, 13.3) angeordnet ist.

2. Landwirtschaftliche Arbeitsmaschine (1) nach Anspruch 1, **dadurch gekennzeichnet, dass** die Verkleidung (12) eine von dem zweiten Rahmenelement (16) getragene Hauptverkleidung (12.1) umfasst, welche zumindest eine Ausnehmung (13.1, 13.2) umfasst, in der zumindest ein als Beleuchtungseinrichtung ausgebildetes Funktionselement (14.1, 14.2) angeordnet ist.

3. Landwirtschaftliche Arbeitsmaschine (1) nach Anspruch 2, **dadurch gekennzeichnet, dass** die Beleuchtungseinrichtung eine Lichtleiste (14.1) ist und die Ausnehmung (13.1) zur Anordnung der Lichtleiste (14.1) ausgebildet ist, wobei die Hauptverkleidung (12.1) an einer inneren Oberfläche (18.1) im Randbereich (R1) der Ausnehmung (13.1) zumindest eine Befestigungsstruktur (19) zum Befestigen der Lichtleiste (14.1) an der Hauptverkleidung (12.1) umfasst, welche in Gestalt eines zylindrischen Vorsprungs mit einer Bohrung zur Aufnahme eines Befestigungsmittels ausgebildet ist, wobei das Zentriermittel (17.1) als zumindest eine an einer Umfangsfläche (U1) des Vorsprungs angeordnete Rippe ausgebildet ist.

4. Landwirtschaftliche Arbeitsmaschine (1) nach Anspruch 2 oder 3 **dadurch gekennzeichnet, dass** die Beleuchtungseinrichtung eine zylindrische Beleuchtungseinrichtung (14.2) ist und die Ausnehmung (13.2) zur Anordnung der zylindrischen Beleuchtungseinrichtung (14.2) ausgebildet ist, wobei das Zentriermittel (17.2) als eine an einer inneren, einen umfänglichen Rand (20) der Ausnehmung (13.2) definierenden, Oberfläche (18.2), der Hauptverkleidung (12.1) angeordnete Rippe ausgebildet ist.

5. Landwirtschaftliche Arbeitsmaschine (1) nach Anspruch 4, **dadurch gekennzeichnet, dass** die Hauptverkleidung (12.1) an einer weiteren inneren Oberfläche (18.3) im Randbereich (R2) der Ausnehmung (13.2) zumindest eine Befestigungsstruktur (21) zum Befestigen der zylindrischen Beleuchtungseinrichtung (14.2) an der Hauptverkleidung (12.1) umfasst, welche in Gestalt eines zylindrischen Vorsprungs mit einer Bohrung zur Aufnahme eines Befestigungsmittels ausgebildet ist, wobei die Hauptverkleidung (12.1) zumindest ein weiteres, an einer Umfangsfläche (U2) des Vorsprungs angeordnetes, Zentriermittel (17.3) umfasst, welches als Rippe ausgebildet ist.

6. Landwirtschaftliche Arbeitsmaschine (1) nach Anspruch 4 oder 5, **dadurch gekennzeichnet, dass** die zylindrische Beleuchtungseinrichtung (14.2) ein Ringelement (22) umfasst, an welchem eine Leuchtmittelanordnung angeordnet ist, wobei das Ringelement (22) an einem außenumfänglichen Rand (22.1) zumindest ein als Rippe ausgebildetes Positioniermittel (23) umfasst, welches mit dem Zentriermittel (17.2) und/oder dem weiteren Zentriermittel (17.3) zur definierten Ausrichtung und Positionierung der zylindrischen Beleuchtungseinrichtung (14.2) in der Ausnehmung (13.2) zusammenwirkt.

7. Landwirtschaftliche Arbeitsmaschine (1) nach einem der Ansprüche 2 oder 3 in Kombination mit einem der Ansprüche 4 bis 6, **dadurch gekennzeichnet, dass** die die Lichtleiste (14.1) aufnehmende Ausnehmung (13.1) und die zumindest eine das zylindrische Beleuchtungseinrichtung (14.2) aufnehmende Ausnehmung (13.2) in dem die Front (F) der landwirtschaftlichen Arbeitsmaschine (1) bereichsweise definierenden Bereich der Hauptverkleidung (12.1) in Fahrzeughöhenrichtung (F_{H}) übereinanderliegend ausgebildet sind.

8. Landwirtschaftliche Arbeitsmaschine (1) nach Anspruch 7, **dadurch gekennzeichnet, dass** die Hauptverkleidung (12.1) zwischen den in Fahrzeughöhenrichtung (F_{H}) übereinanderliegend ausgebildeten Ausnehmungen (13.1,13.2) bereichsweise unterbrochen ist, wobei an der Hauptverkleidung (12.1) innenseitig eine die Unterbrechung abschnittsweise überbrückende Stabilisierungsstruktur (31.1) angeordnet ist.

9. Landwirtschaftliche Arbeitsmaschine (1) nach einem der Ansprüche 2 bis 8, **dadurch gekennzeichnet, dass** die Hauptverkleidung (12.1) an einer inneren Oberfläche (18.5) im oberen Bereich (O) der Motorhaube (11) eine die Steifigkeit der Hauptverkleidung (12.1) erhöhende Versteifungsstruktur (31.2) umfasst, wobei die Versteifungsstruktur (31.2) vorzugsweise als integraler Bestandteil der Hauptverkleidung (12.1) ausgebildet ist.

10. Landwirtschaftliche Arbeitsmaschine (1) nach Anspruch 9, **dadurch gekennzeichnet, dass** die Versteifungsstruktur (31.2) rippenförmig ausgebildet ist.

11. Landwirtschaftliche Arbeitsmaschine (1) nach Anspruch 9 oder 10, **dadurch gekennzeichnet, dass** die Dimensionierung der Versteifungsstruktur (31.2) auf einem Ergebnis einer Berechnung mittels einer Finite-Elemente-Methode unter Berücksichtigung möglicher im Betrieb der landwirtschaftlichen Arbeitsmaschine (1) auftretender Lastfälle, vorzugsweise einem Beschleunigungslastfall, einem Windgeschwindigkeitslastfall und/oder einem statischen Lastfall, basiert.

12. Landwirtschaftliche Arbeitsmaschine (1) nach einem der Ansprüche 2 bis 11, **dadurch gekennzeichnet, dass** zwischen dem zweiten Rahmenelement (16) und der Hauptverkleidung (12.1) im Kopplungsbereich der Rahmenelemente miteinander eine Stützstruktur (31.3) angeordnet ist, wobei die Stützstruktur (31.3) sowohl an dem zweiten Rahmenelement (16) als auch der Hauptverkleidung (12.1) befestigt ist, wobei die Stützstruktur (31.3) vorzugsweise als zumindest ein plattenförmiges Element, besonders bevorzugt zwei plattenförmige Elemente, ausgebildet ist.

13. Landwirtschaftliche Arbeitsmaschine (1) nach einem der Ansprüche 1 bis 12, **dadurch gekennzeichnet, dass** die Verkleidung (12) zwei Seitenverkleidungen (12.2) umfasst, welche jeweils an dem ersten Rahmenelement und/oder dem Maschinenrahmen (3) befestigt sind, wobei jede Seitenverkleidung (12.2) zumindest eine Ausnehmung (13.3) umfasst, in der ein als Lüftungsgitter (14.3) ausgebildetes Funktionselement (14) angeordnet ist.

14. Landwirtschaftliche Arbeitsmaschine (1) nach Anspruch 13, **dadurch gekennzeichnet, dass** das Zentriermittel (17.4) als eine, an einer inneren Oberfläche (18.4) einer jeweiligen Seitenverkleidung (12.2) im Randbereich (R3) der Ausnehmung (13.3) angeordnete, Rippe ausgebildet ist, wobei eine die Ausrichtung und Positionierung des Lüftungsgitters (14.3) definierende Oberfläche (24) der Rippe parallel zum Rand (25) der Ausnehmung (13.3) verlaufend ausgerichtet ist.

15. Landwirtschaftliche Arbeitsmaschine (1) nach Anspruch 13 oder 14, **dadurch gekennzeichnet, dass** an einer inneren Oberfläche (18) einer jeweiligen Seitenverkleidung (12.2) im Randbereich (R4) der Seitenverkleidung (12.2) zumindest eine Befestigungsstruktur (27) zum Befestigen der Seitenverkleidung (12.2) an dem ersten Rahmenelement und/oder dem Maschinenrahmen (3) angeordnet ist, wobei die Befestigungsstruktur (27) zwei auf der inneren Oberfläche parallel zueinander angeordnete Stege (28.1, 28.2) sowie ein mittels der Stege (28.1, 28.2) gehaltertes Befestigungsmittel (29) umfasst, wobei die Stege (28.1, 28.2) jeweils an einem Ende eine Erhöhung (30) umfassen, wobei die Erhöhungen (30) an jeweils einander gegenüberliegenden Enden der Stege (28.1, 28.2) ausgebildet sind, wobei das Befestigungsmittel (29) einen Halterungsabschnitt (29.1) und einen, insbesondere in Gestalt einer Klemme ausgeführten, Befestigungsabschnitt (29.2) umfasst, wobei der Halterungsabschnitt (29.1) bereichsweise zwischen den Stegen (28.1, 28.2) aufgenommen ist und eine Sicherung des Halterungsabschnitts (29.1) an den Stegen (28.1, 28.2) über eine Änderung der Ausrichtung des Befestigungsmittels (29) relativ zu den Stegen (28.1, 28.2) erfolgt.
